# FASCICULE DE BREVET EUROPEEN

(11) **EP 3 028 923 B1**
(45) Date de publication et mention de la délivrance du brevet: **31.05.2017**
(21) Numéro de dépôt: 15020229.9
(22) Date de dépôt: 18.11.2015
(51) Int. Cl.: B62B 3/06, B66F 9/12, B66F 17/00

(54) **TRANSPALETTE PESEUR ELECTRIQUE DOUBLE PALETTES AVEC SYSTEME DE POSITIONNEMENT AUTOMATIQUE DE PALETTES INTEGRE**
ELEKTRISCHER WIEGEHUBWAGEN FÜR DOPPELPALETTEN MIT INTEGRIERTEM AUTOMATISCHEM POSITIONIERSYSTEM FÜR PALETTEN
PALLET TRUCK FOR ELECTRIC WEIGHING OF DOUBLE PALLET WITH INTEGRATED AUTOMATIC PALLET POSITIONING SYSTEM

(30) Priorité: 02.12.2014 FR 1402744
(43) Date de publication de la demande: 08.06.2016
(73) Titulaire: Balea SA, 34270 Saint-Mathieu de Trèviers (FR)
(72) Inventeur: Cosmas, Vassili, 34270 Saint Mathieu DE Treviers (FR)
(74) Mandataire: Gosse, Michel

(56) Documents cités:
- EP-A2- 2 184 256
- EP-A2- 2 578 469
- WO-A1-2011/120140
- DE-C1- 19 704 514

## Description

### DOMAINE DE L'INVENTION

La présente invention se rapporte au domaine des transpalettes peseurs électriques double palettes avec système de positionnement automatique de palettes intégré dans lesquels le contrôle pondéral est effectué en temps réel sur les deux palettes de façon indépendante avec une grande précision de pesage.

### EXPOSE DE L'ARRIERE PLAN TECHNOLOGIQUE

Les transpalettes connus de ce type comportent essentiellement :
- deux supports de fourches reliés au tablier du transpalette ;
- deux paires de sous-ensembles de fourches, mécaniquement indépendants les uns des autres, reposant chacun sur chaque support de fourche par l'intermédiaire de ses propres capteurs de poids ;
- une unité électronique gérant les signaux en provenance desdits capteurs et les commandes clients.

Le problème principal qui se pose pour une bonne pesée est le centrage de chaque palette sur chaque paire de sous-ensembles de fourches sur lesquels elle doit reposer. Or, celui-ci est actuellement réalisé manuellement :
- soit en prédisposant sur le sol, seules ou empilées, les palettes à saisir à une distance l'une de l'autre correspondant à l'espace central existant entre les deux paires de fourches ce qui présente un premier inconvénient résultant du prépositionnement mesuré des palettes entre elles et un deuxième inconvénient pouvant résulter d'un risque de déplacement de celles-ci, de l'une par rapport à l'autre, lors du passage des fourches, ou pendant leur déplacement, du fait qu'elles ne soient pas chargées, donc légères, avant la préparation de la commande ;
- soit en utilisant un panneau, servant de calibre, que l'on place dans la partie centrale des deux paires de fourches lors du chargement des palettes autrement dit un élément externe qu'il faut manipuler en cours et après le prépositionnement des palettes et stocker.
Un état de la technique pertinent est décrit dans les documents WO 2011/120140 (WEIGHT POINT INC) et DE 19704514 (LINDE AG).

### RESUME DE L'INVENTION

L'invention est définie par la revendication 1, et décrit un système, intégré au transpalette, de positionnement automatique des palettes sur les sous-ensembles de fourches qui élimine les inconvénients susmentionnés en garantissant :
- d'une part leur bon positionnement et ce quelle que soit leur disposition initiale sur le sol ou sur un empilement ;
- et d'autre part leur maintien au cours du déplacement du transpalette même quand elles ne sont pas chargées.

Selon les caractéristiques essentielles de l'invention, le système destiné à être adapté au transpalette comporte :
- sur chaque sous-ensemble de fourche situé côté tablier, proche de ce dernier, un premier dispositif destiné à détecter le positionnement de la première palette contre ledit tablier ;
- sur chaque autre sous-ensemble de fourche, proche de leur extrémité centrale, un deuxième dispositif constitué d'une butée, escamotable, qui se soulève pour faire barrage au déplacement de la deuxième palette qui vient s'appuyer contre ladite butée qui est associée à un moyen d'actionnement commandé à distance par le premier dispositif dès que celui-ci détecte le positionnement de la première palette contre le tablier.

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins :

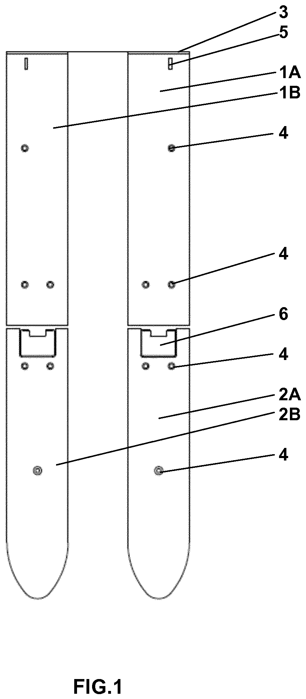

- la figure 1 représente, en vue de dessus, les deux paires de fourches montrant la localisation des dispositifs selon l'invention ;

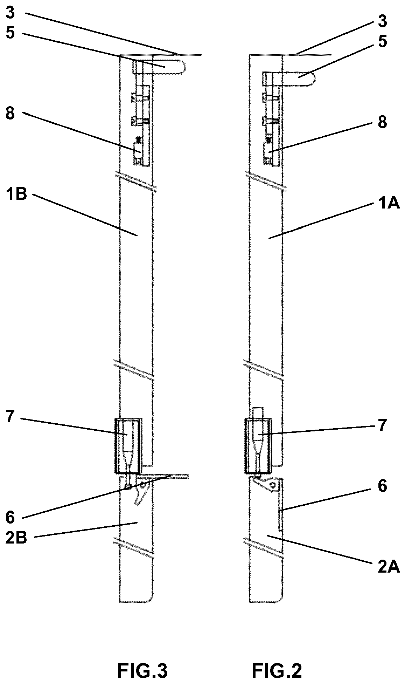

- la figure 2 représente, en vue de profil et en coupe, une réalisation particulière des dispositifs selon l'invention en position repos ;
- la figure 3 représente, en vue de profil et en coupe, ladite réalisation en position active.

### DESCRIPTION DETAILLEE DE L'INVENTION

Le système représenté aux figures, qui est destiné au positionnement automatique de palettes, est destiné à être intégré à un transpalette peseur électrique double palettes dans lequel le contrôle pondéral est effectué en temps réel sur les deux palettes de façon indépendante avec une grande précision de pesage.

Ledit transpalette est du type comportant essentiellement :
- deux supports de fourches reliés au tablier (3) du transpalette ;
- deux paires (1A,1B) et (2A,2B) de sous-ensembles de fourches, mécaniquement indépendants les uns des autres, reposant chacun sur chaque support de fourche (non représentés) par l'intermédiaire de ses propres capteurs de poids (4) ;
- une unité électronique (non représentée) gérant les signaux en provenance desdits capteurs et les commandes clients.

Selon la réalisation générale de l'invention, le système comporte :
- sur chaque sous-ensemble de fourche (1A,1B) situé côté tablier (3), proche de ce dernier, un premier dispositif (5) destiné à détecter le positionnement de la première palette contre ledit tablier ;
- sur chaque autre sous-ensemble de fourche (2A,2B), proche de leur extrémité centrale, un deuxième dispositif constitué d'une butée (6), escamotable, qui se soulève pour faire barrage au déplacement de la deuxième palette qui vient s'appuyer contre ladite butée qui est associée à un moyen d'actionnement (7) commandé à distance par le premier dispositif (5) dès que celui-ci détecte le positionnement de la première palette contre le tablier (3).

Selon des variantes possibles, non limitatives, de réalisation du système selon l'invention :
- le premier dispositif (5) peut être une cellule électronique (photovoltaïque ou autre) qui envoie le signal de détection au deuxième dispositif (6) dont le moyen d'actionnement (7) est un électro-aimant ;
- le premier dispositif (5) peut être un levier mobile, pivotant ou se déplaçant longitudinalement, qui actionne un micro rupteur (8) qui envoie le signal de détection au deuxième dispositif (6) dont le moyen d'actionnement (7) est un électro-aimant ;
- le premier dispositif (5) peut être un levier mobile, pivotant ou se déplaçant longitudinalement, qui actionne directement le deuxième dispositif (6) au moyen d'une tige mécanique ;
- le deuxième moyen (6), escamotable, peut pivoter ou coulisser : lorsqu'il est pivotant, il repasse en position escamotée dès que la palette du fond, en cours de déchargement, vient s'appuyer dessus.

L'unité électronique :
- intercepte les erreurs en temps réel de chaque geste de l'opérateur ;
- alerte le préparateur des erreurs de chargement ;
- l'informe des opérations à réaliser (préparation des commandes par exemple). L'appareil pourra être utilisé en mono balance pour un ou plusieurs clients sur la totalité des fourches ou en combinant deux balances distinctes pour deux clients différents. Les palettes sont alors dissociées par un système adapté de séparation physique. L'afficheur de poids peut facilement être paramétré pour visualiser l'une des deux configurations.

Bien entendu, l'homme de métier sera apte à réaliser l'invention telle que décrite et représentée en appliquant et en adaptant des moyens connus sans qu'il soit nécessaire de les décrire ou de les représenter.
Il pourra également prévoir d'autres variantes sans pour cela sortir du cadre de l'invention tel que déterminé par la teneur des revendications.

## Revendications

1. Transpalette peseur électrique double palettes avec système de positionnement automatique de palettes intégré dans lequel le contrôle pondéral est effectué en temps réel sur les deux palettes de façon indépendante avec une grande précision de pesage ;
ledit transpalette comportant essentiellement :
- deux supports de fourches reliés au tablier (3) du transpalette ;
- deux paires (1A, 1B; 2A, 2B) de sous-ensembles de fourches, mécaniquement indépendants les uns des autres, reposant chacun sur chaque support de fourche par l'intermédiaire de ses propres capteurs de poids (4) ;
- une unité électronique gérant les signaux en provenance desdits capteurs et les commandes clients ;
**caractérisé en ce qu'**il comporte :
- sur chaque sous-ensemble de fourche (1A,1B) situé côté tablier (3), proche de ce dernier, un premier dispositif (5) destiné à détecter le positionnement de la première palette contre ledit tablier ;
- sur chaque autre sous-ensemble de fourche (2A,2B), proche de leur extrémité centrale, un deuxième dispositif constitué d'une butée (6), escamotable, qui se soulève pour faire barrage au déplacement de la deuxième palette qui vient s'appuyer contre ladite butée qui est associée à un moyen d'actionnement (7) commandé à distance par le premier dispositif (5) dès que celui-ci détecte le positionnement de la première palette contre le tablier (3).

2. Transpalette, selon la revendication 1, **caractérisé en ce que** le premier dispositif (5) est une cellule électronique qui envoie le signal de détection au deuxième dispositif (6) dont le moyen d'actionnement (7) est un électro-aimant.

3. Transpalette, selon la revendication 1, **caractérisé en ce que** le premier dispositif (5) est un levier mobile qui actionne un micro rupteur (8) qui envoie le signal de détection au deuxième dispositif (6) dont le moyen d'actionnement (7) est un électro-aimant.

4. Transpalette, selon la revendication 1, **caractérisé en ce que** le premier dispositif (5) est un levier mobile qui actionne directement le deuxième dispositif (6) au moyen d'une tige mécanique.

## Patentansprüche

1. Elektrischer Wiegehubwagen für Doppelpalette mit integriertem automatischem Palettenpositionierungssystem, in dem die Gewichtskontrolle in Echtzeit auf den beiden Paletten unabhängig mit einer hohen Wiegepräzision durchgeführt wird,
wobei der Hubwagen im Wesentlichen Folgendes umfasst:
- zwei Gabelträger, die mit dem Deck (3) des Hubwagens verbunden sind;
- zwei Paar (1A, 1 B; 2A, 2B) Gabel-Untereinheiten, die mechanisch voneinander unabhängig sind, die jeweils auf jedem Gabelträger mit Hilfe ihrer eigenen Gewichtssensoren (4) aufliegen;
- eine elektronische Einheit, die die Signale, die von den Sensoren stammen, und die Kundensteuerungen verwalten;
**dadurch gekennzeichnet, dass** er Folgendes umfasst:
- auf jeder Gabeluntereinheit (1A, 1 B), die sich auf der Seite des Decks (3), nahe diesem Letzteren, befindet, eine erste Vorrichtung (5), die ausgelegt ist, um die Positionierung der ersten Palette auf dem Deck nachzuweisen;
- auf jeder anderen Gabel-Untereinheit (2A, 2B), nahe ihrem zentralen Ende, eine zweite Vorrichtung, bestehend aus einem versenkbaren Anschlag (6), der sich hebt, um die Bewegung der zweiten Palette zu blockieren, die gegen den Anschlag aufliegt, der mit einem Betätigungsmittel (7) assoziiert ist, das von der ersten Vorrichtung (5) ferngesteuert wird, sobald diese die Positionierung der ersten Palette auf dem Deck (3) nachweist.

2. Hubwagen nach Anspruch 1, **dadurch gekennzeichnet, dass** die erste Vorrichtung (5) eine elektronische Zelle ist, die das Nachweissignal an die zweite Vorrichtung (6) schickt, deren Betätigungsmittel (7) ein Elektromagnet ist.

3. Hubwagen nach Anspruch 1, **dadurch gekennzeichnet, dass** die erste Vorrichtung (5) ein beweglicher Hebel ist, der einen Mikrounterbrecher (8) betätigt, der das Nachweissignal an die zweite Vorrichtung (6) schickt, deren Betätigungsmittel (7) ein Elektromagnet ist.

4. Hubwagen nach Anspruch 1, **dadurch gekennzeichnet, dass** die erste Vorrichtung (5) ein beweglicher Hebel ist, der direkt die zweite Vorrichtung (6) mit Hilfe eines mechanischen Schafts betätigt.

## Claims

1. Double pallet electric weighing pallet truck with integrated automatic pallet positioning system wherein the weight check is carried out in real time on both pallets independently with high weighing precision;
said pallet truck comprising primarily:
- two fork supports connected to the apron (3) of the pallet truck;
- two pairs (1A, 1 B; 2A, 2B) of fork sub-assemblies, mechanically independent from another, with each one resting on each fork support by the intermediary of its own weight sensors (4);
- an electronic unit managing the signals coming from said sensors and the customer orders;
**characterised in that** it comprises:
- on each fork sub-assembly (1A, 1 B) located on the apron side (3), close to the latter, a first device (5) intended to detect the positioning of the first pallet against said apron;
- on each other fork sub-assembly (2A, 2B), close to their central end, a second device comprised of a retractable abutment (6), which is raised to act as a barrier to the displacement of the second pallet that bears against said abutment which is associated with a means of actuating (7) controlled remotely by the first device (5) as soon as the latter detects the positioning of the first pallet against the apron (3).

2. Pallet truck, according to claim 1, **characterised in that** the first device (5) is an electronic cell that sends the detection signal to the second device (6) of which the means of actuating (7) is an electromagnet.

3. Pallet truck, according to claim 1, **characterised in that** the first device (5) is a mobile lever that actuates a microswitch (8) which sends the detection signal to the second device (6) of which the means for actuating (7) is an electromagnet.

4. Pallet truck, according to claim 1, **characterised in that** the first device (5) is a mobile lever that directly actuates the second device (6) by means of a mechanical rod.
